# EUROPÄISCHE PATENTSCHRIFT

(11) **EP 2 794 231 B1**
(45) Veröffentlichungstag und Bekanntmachung des Hinweises auf die Patenterteilung: **24.01.2018**
(21) Anmeldenummer: 12813826.0
(22) Anmeldetag: 19.12.2012
(51) Int. Cl.: B29C 49/48, B29C 49/78, B29C 49/06, B29C 49/12, B29C 49/24, B29C 49/36

(54) **VERFAHREN ZUM BETREIBEN EINER VORRICHTUNG ZUM UMFORMEN VON KUNSTSTOFFVORFORMLINGEN ZU KUNSTSTOFFBEHÄLTNISSEN UND VORRICHTUNG ZUM UMFORMEN VON KUNSTSTOFFVORFORMLINGEN ZU KUNSTSTOFFBEHÄLTNISSEN**
METHOD FOR OPERATING A DEVICE FOR THE RESHAPING OF PLASTIC PREMOULDINGS INTO PLASTIC CONTAINERS AND DEVICE FOR THE RESHAPING OF PLASTIC PREMOULDINGS INTO PLASTIC CONTAINERS
PROCÉDÉ PERMETTANT DE FAIRE FONCTIONNER UN DISPOSITIF DE FAÇONNAGE D'ÉBAUCHES EN MATIÈRE PLASTIQUE POUR OBTENIR DES CONTENANTS EN MATIÈRE PLASTIQUE ET DISPOSITIF PERMETTANT DE FAÇONNER DES ÉBAUCHES EN MATIÈRE PLASTIQUE POUR OBTENIR DES CONTENANTS EN MATIÈRE PLASTIQUE

(30) Priorität: 19.12.2011 DE 102011056627
(43) Veröffentlichungstag der Anmeldung: 29.10.2014
(73) Patentinhaber: Krones AG, 93073 Neutraubling (DE)
(72) Erfinder: WAHL, Matthias, 93073 Neutraubling (DE); WINZINGER, Frank, 93073 Neutraubling (DE)
(74) Vertreter: Bittner, Bernhard
(86) Internationale Anmeldenummer: PCT/EP2012/076187
(87) Internationale Veröffentlichungsnummer: WO 2013/092736

(56) Entgegenhaltungen:
- EP-A2- 2 165 935
- DE-A1-102006 051 533
- DE-A1-102007 005 489
- US-A- 5 591 462

## Beschreibung

Die vorliegende Erfindung bezieht sich auf ein Verfahren zum Betreiben einer Vorrichtung zum Umformen von Kunststoffvorformlingen zu Kunststoffbehältnissen. Derartige Vorrichtungen sind aus dem Stand der Technik seit langem bekannt. Üblicherweise werden dabei erwärmte Kunststoffvorformlinge durch Beaufschlagung mit Druckluft zu Kunststoffbehältnissen expandiert. Eine derartige Blasmaschine weist dabei üblicherweise eine Vielzahl von Blasstationen auf, die zum Expandieren der Kunststoffvorformlinge dienen. Die einzelnen Blasstationen weisen wiederum üblicherweise an diesen (insbesondere mittelbar) montierte Blasformen auf, die den Hohlraum ausbilden, innerhalb dessen die Kunststoffvorformlinge expandiert werden. Die einzelnen Blasstationen setzen sich dabei aus einer Vielzahl von einzelnen Behandlungselementen zusammen, wie beispielsweise den besagten Blasformen, den Blasformträgern, Blasformträgerschalen, Reckstangen, Blasdüsen und dergleichen.

Es ist weiterhin bekannt, dass die auf diese Weise hergestellten Behältnisse nach dem Herstellungsvorgang getestet werden, beispielsweise mittels optischer Überprüfungseinrichtungen. Sollten bei derartigen Kontrollen Fehler festgestellt werden, so kann gegebenenfalls der Maschinenbediener identifizieren, welche Blasstation diesen Fehler verursacht hat. Allerdings lässt sich der Fehler oft nicht einem bestimmten Bauteil zuordnen, sondern kann auf mehreren unterschiedlichen Fehlerquellen beruhen, beispielsweise auf fehlerhaften Blasformträgern oder auch auf fehlerhaften Blasformen. Weiterhin sind üblicherweise die Blasformen von ihrem Blasformträger demontierbar, um beispielsweise unterschiedliche Behältnisgrößen mit anderen Blasformen blasen zu können.

Vorrichtungen und Verfahren der eingangsgenannte Art sind in den Druckschriften EP-A-2165935, DE102007-005489, DE102006-051533 und US5591462 beschrieben. Der vorliegenden Erfindung liegt daher die Aufgabe zugrunde, ein Verfahren und eine Vorrichtung zur Verfügung zu stellen, welche das Feststellen der Ursachen von bestimmten Zuständen und insbesondere von Störzuständen erleichtert. Die wird erfindungsgemäß durch ein Verfahren nach Anspruch 1 erreicht. Vorteilhafte Ausführungsformen und Weiterbildungen sind Gegenstand der Unteransprüche.
Bei einem erfindungsgemäßen Verfahren zum Betreiben einer Vorrichtung zum Umformen von Kunststoffvorformlingen zu Kunststoffbehältnissen, wobei die Vorrichtung einen Träger aufweist, an dem eine Vielzahl von Umformungsstationen angeordnet ist und jede dieser Umformungsstationen wenigstens ein -vorzugsweise an diese Behandlungsstation montierbares und/oder von dieser Behandlungsstation demontierbares - Behandlungselement zum Behandeln der Kunststoffvorformlinge aufweist, werden in einem ersten Verfahrensschritt die einzelnen Umformungsstationen in einer ersten Bestückungskonfiguration bestückt, wobei jeder Umformungsstation ein bestimmtes Behandlungselement zugeordnet wird. In einem weiteren Verfahrensschritt wird wenigstens eine physikalische Eigenschaft erfasst, welche für die Umformung der Kunststoffvorformlinge oder für die umgeformten Behältnisse charakteristisch ist wobei die physikalische Eigenschaft im Rahmen der ersten Bestückungskonfiguration erfasst wird.
In einem weiteren Verfahrensschritt werden die einzelnen Umformungsstationen in einer zweiten Bestückungskonfiguration bestückt, wobei jeder Umformungsstation wenigstens ein bestimmtes Behandlungselement zugeordnet wird und wobei sich die zweite Bestückungskonfiguration derart von der ersten Bestückungskonfiguration unterscheidet, dass im Rahmen der zweiten Bestückungskonfiguration wenigstens ein Behandlungselement einer anderen Umformungsstation zugeordnet ist als im Rahmen der ersten Bestückungskonfiguration. In einem weiteren Verfahrensschritt wird wenigstens eine physikalische Eigenschaft erfasst, welche für die Umformung der Kunststoffvorformlinge und/oder für die umgeformten Behältnisse charakteristisch ist und diese physikalische Eigenschaft wird im Rahmen der zweiten Bestückungskonfiguration erfasst.

Unter einer Bestückungskonfiguration wird insbesondere die Gesamtheit der an den Umformungsstationen angeordneten Behandlungselemente verstanden. Dabei handelt es sich vorteilhaft um im Wesentlichen gleichartige Behandlungselemente, die an den im Wesentlichen gleichartigen Umformungsstationen angeordnet werden. Es wird nunmehr vorgeschlagen, dass diese Bestückungskonfiguration wenigstens einmal geändert wird und jeweils eine Eigenschaft des Behältnisses, insbesondere eine physikalische Eigenschaft, welche für die Qualität des Behältnisses charakteristisch ist, bestimmt wird.

Falls es sich beispielsweise bei den Behandlungselementen um Blasformen handelt, wird durch ein bewusstes bzw. gezieltes Einsetzen der Blasformen in unterschiedliche Kavitäten ermittelt, in welcher Kombination durchschnittlich die besten Behältnisse produziert werden. Es wäre dabei auch möglich, dass diese Herstellung der unterschiedlichen Bestückungskonfigurationen bzw. das Anordnen der unterschiedlichen Behandlungselemente an den einzelnen Umformungsstationen automatisch beispielsweise durch einen Formwechselautomaten erfolgt. Für einen Formwechselautomaten kann dieses Vorgehen auch systematisch und programmgesteuert erfolgen. Auf diese Weise ist es denkbar, dass der Bediener nach einer vorgegebenen Anzahl an Versuchen ermittelt (hierfür können sowohl Zeitwerte als auch Anzahlen eingestellt werden) wie er die besten Behältnisse erzeugt.

Auch kann der Benutzer auf diese Weise feststellen, dass manche Fehler durch das Behandlungselement bedingt sind und manche Fehler durch die Umformungsstation. Auf diese Weise kann im Einzelfall ein bestimmtes Behandlungselement oder eine bestimmte Station (zum Beispiel Reckstange oder Ventilblock oder Formträger) ausgewechselt werden.

Unter einem Erfassen der physikalischen Eigenschaft im Rahmen der ersten oder zweiten Bestückungskonfiguration wird insbesondere verstanden, dass die Behandlungselemente in der besagten Bestückungskonfiguration an den Umformungsstationen angeordnet werden und anschließend insbesondere die in dieser Bestückungskonfiguration produzierten Behältnisse anhand der physikalischen Eigenschaften überprüft werden.

Vorteilhaft handelt es sich bei dem Träger um einen drehbaren Träger. Die einzelnen Umformungsstationen setzen sich vorteilhaft aus einer Vielzahl von Behandlungselementen zusammen.

Vorteilhaft handelt es sich bei der physikalischen Eigenschaft um einen Qualitätszustand des geblasenen Behältnisses und/oder einen Fehlerzustand (insbesondere des geblasenen Behältnisses). Falls beispielsweise ein derartiger Fehlerzustand erfasst wird, kann dieser mehrere Ursachen haben und es kann durch gezieltes Wechseln der Konfigurationen das fehlerhafte Bauteil identifiziert werden. Unter der Umformungsstation wird im Folgenden auch im weiteren Sinne die vollständige Anordnung mit den einzelnen Behandlungselementen verstanden.

Damit wäre beispielsweise folgende Vorgehensweise möglich. In einem gewöhnlichen Arbeitsbetrieb und einer bestimmten Bestückungskonfiguration wird festgestellt, dass an einem bestimmten Behältnis immer der gleiche Fehler auftritt. Der Benutzer oder auch die Maschinensteuerung kann feststellen, dass dieser Fehler möglicherweise auf einer fehlerhaften Blasform oder aber einem fehlerhaften Blasformträger beruhen kann. Es wird nunmehr die Bestückungskonfiguration geändert und anschließend wieder überprüft, ob dieser Fehler auftritt. Tritt dieser Fehler nunmehr bei der gleichen Behandlungsstation auf, so kann daraus geschlossen werden, dass der Blasformträger (bzw. der Ventilblock oder der Reckstangenantrieb oder das Druckkissen) an dieser fehlerhaft ist. Tritt der Fehler jedoch bei einer anderen Station auf, insbesondere bei derjenigen Station, an der nun die Blasform angeordnet ist, so kann daraus geschlossen werden, dass die Blasform selbst einen Fehler aufweist.

Bei einem bevorzugten Verfahren wird wenigstens eine Bestückungskonfiguration abgespeichert. Vorteilhaft werden alle Bestückungskonfigurationen abgespeichert und besonders bevorzugt mit entsprechenden Angaben über deren Betriebsdauer, deren Benutzungszeit und dergleichen. Auf diese Weise kann auch eine Idealkonfiguration ermittelt werden.

Bei einem weiteren vorteilhaften Verfahren wird die physikalische Eigenschaft auch einer bestimmten Umformungsstation zugeordnet. Dies kann beispielsweise unter Berücksichtigung von Drehgeberstellungen erfolgen. So kann beispielsweise bei Auftreten eines bestimmten Fehlers genau ermittelt werden, welche Umformungsstation mit welchen darin angeordneten Behandlungselementen den besagten Fehler verursacht hat.

Bei einem weiteren bevorzugten Verfahren erfolgt auch eine Zuordnung weiterer Behandlungsaggregate wie insbesondere eine Zuordnung einer vorgeschalteten Heizeinrichtung. Wie eingangs erwähnt, werden die Kunststoffvorformlinge zunächst in einer Heizeinrichtung erwärmt. Dabei sind sowohl Durchlauföfen bekannt, durch welche die Kunststoffvorformlinge kettenartig durchlaufen. Es sind jedoch auch Erwärmungseinrichtungen bekannt, welche individuelle Erwärmungsstationen zum Erwärmen der Kunststoffvorformlinge aufweisen. Bei einer bevorzugten Ausführungsform handelt es sich bei dieser Heizeinrichtung um eine Mikrowellenerwärmungseinrichtung, die eine Vielzahl von Mirkrowellenerwärmungsstationen aufweist. Ebenso kann es sich bei der Heizeinrichtung zum individuellen Erwärmen um eine Infraroterwärmungseinrichtung handeln, die mehrere Heiztaschen aufweist. Mittels der besagten Zuordnung kann auf diese Weise einer physikalische Eigenschaft nicht nur eine Umformungsstation zugeordnet werden, sondern auch eine Erwärmungsstation. Der Grund dafür liegt darin, dass ein bestimmter Fehler eines Behältnisses auch auf einer fehlerhaften Erwärmung dieses Behältnisses beruhen kann. Durch die eindeutige Zuordnung ist es auch möglich, eine möglicherweise fehlerhafte Heizstation ermitteln zu können. Auch wäre es in Bezug auf die Erwärmungs- oder Heizstation möglich, auch die dortigen Behandlungselemente einzutauschen.

Es wäre jedoch auch eine Anwendung auf Durchlauföfen möglich, etwa, um auf fehlerhafte Transportelemente wie z.B. Heizdorne zu schließen, welche die Behältnisse führen.

Weiterhin kann eine Zuordnung auch mit einer sogenannten preferential heating Station erfolgen, das heißt einer Heizeinrichtung, welche gezielt Kunststoffvorformlinge in deren Umfangsrichtung ungleichmäßig erwärmt, um auf diese Weise beispielsweise ovale Behältnisse herzustellen. Auch kann eine Zuordnung an eine Sterilisationsstation erfolgen, die beispielsweise vor der Umformungsstation angeordnet ist und bereits Kunststoffvorformlinge sterilisiert. Daneben wäre auch eine derartige Zuordnung zwischen diesen Anlagenteilen wie einer Heizeinrichtung und einer Sterilisationsstation möglich.

Es wird weiterhin darauf hingewiesen, dass die vorliegende Erfindung auch auf andere Vorrichtungen anwendbar ist, wie beispielsweise eine Befüllungseinrichtung und/oder eine Etikettiereinrichtung und/oder eine Verschließereinrichtung. In diesem Fall kann es sich bei den Behandlungselementen um Füllelemente handeln, welche die Behältnisse mit einer Flüssigkeit, insbesondere einem Getränk, befüllen. Auch bei dieser Vorrichtungsgattung kann ein Träger vorgesehen sein, an dem eine Vielzahl von Füllelementen angeordnet ist. Auch kann dabei die Bestückungskonfiguration derart geändert werden, dass an unterschiedlichen Füllstationen unterschiedliche Füllelemente angeordnet werden, um auf diese Weise gezielt zu ermitteln, auf welchen Fehlern ein bestimmtes Resultat, zum Beispiel eine unzureichend befüllte Flasche, beruht. Weitere Behandlungselemente der Befüllungsstation sind beispielsweise Rückluftrohre, ganze Füllventile oder Klammern für den Transport. Behandlungselemente einer Verschließstation sind beispielsweise Verschließköpfe. Behandlungselemente einer Etikettiereinrichtung sind beispielsweise Drehteller, Zentrierglocken oder Etikettieraggregate, welche Etiketten auf Behälter aufbringen.

Auch ist eine Zuordnung der Fülleinrichtung zu der Umformungsstation möglich, so dass beispielsweise anhand eines fertig befüllten Behältnisses sowohl identifiziert werden kann, welche Füllstation dieses Behältnis befüllt hat, als auch, welche Umformungsstation zuvor den betreffenden Kunststoffvorformling zu dem Kunststoffvorformling umgeformt hat.

Weiterhin ist es auch möglich, mehrere dieser physikalischen Eigenschaften zu erfassen.

Bei einem weiteren vorteilhaften Verfahren wird die im Rahmen dieser ersten Bestückungskonfiguration erfasste physikalische Eigenschaft mit der im Rahmen der zweiten Bestückungskonfiguration erfassten physikalischen Eigenschaft verglichen. Durch diesen Vergleich kann insbesondere auf Fehlerzustände geschlossen werden.

Bei einem weiteren vorteilhaften Verfahren wird wenigstens eine im Rahmen einer Bestückungskonfiguration erfasste physikalische Eigenschaft mit einer Referenzeigenschaft verglichen. Bei der Referenzeigenschaft kann es sich beispielsweise um eine physikalische Eigenschaft handeln, die für einen Idealzustand des Behältnisses charakteristisch ist, es kann sich jedoch auch um eine Eigenschaft handeln, die gerade für ein fehlerhaft hergestelltes Behältnis charakteristisch ist.

Bei einem weiteren vorteilhaften Verfahren wird aus einem Vergleich einer in einer Bestückungskonfiguration aufgenommenen physikalischen Eigenschaft mit einer Referenzeigenschaft und/oder einer in einer weiteren Bestückungskonfiguration aufgenommenen physikalischen Eigenschaft auf einen Zustand der Vorrichtung, insbesondere einem Fehlerzustand einer bestimmen Umformungsstation geschlossen. Vorteilhaft wird eine Vielzahl derartiger Vergleiche durchgeführt, insbesondere, um das fehlerhafte Bauteil zu ermitteln. Zu diesem Zweck wird, wie oben erwähnt, die physikalische Eigenschaft einer bestimmten Umformungsstation zugeordnet.

Bei einem weiteren bevorzugten Verfahren wird wenigstens eine physikalische Eigenschaft einem bestimmten Behandlungselement zugeordnet.

Bei einem weiteren vorteilhaften Verfahren weist jede Blasstation einen Blasformträger auf und das Behandlungselement ist aus einer Gruppe von Behandlungselementen ausgewählt, welche an dem Blasformträger anordenbare Blasformteile, an dem Blasformträger anordenbare Blasformträgerschalen, Blasdüsen, Reckstangen, an dem Blasformträger anordenbare Blasformbodenteile, Mutterformen, Blasdüsen, Kombinationen hieraus und dergleichen enthält.

Bei einem weiteren vorteilhaften Verfahren ist die physikalische Eigenschaft aus einer Gruppe von physikalischen Eigenschaften ausgewählt, welche eine Kristallinität des gefertigten Behältnisses, eine Wandungsdicke des gefertigten Behältnisses oder Abschnitte des gefertigten Behältnisses, die Abmessungen einer Trennnaht des gefertigten Behältnisses, das Vorhandensein von Brüchen und Rissen in einer Wandung des Behältnisses, eine Massenverteilung des gefertigten Behältnisses, eine Lage des Anspritzpunktes des gefertigten Behältnisses, die Ausprägungen von Konturen des Behältnisses, Farbverläufe, die Temperatur des Behältnisses in bestimmten Bereichen (insbesondere im Boden), eine Gesamthöhe, eine Bereichshöhe oder einen Durchmesser in bestimmten Bereichen, ein Etikettensitz bei Inmoldlabellingmaschinen, ein Dehnungskoeffizient von bestimmten Wandabschnitten (insbesondere bei nicht runden Behältern), Sterilität, Top load Stabilität (Stabilität bzgl. auszuhaltender Lasten in Längsrichtung), Berstdruck, Kombinationen hieraus und dergleichen enthält.

Bei einem weiteren vorteilhaften Verfahren wird die physikalische Eigenschaft mittels einer Bildaufnahmeeinrichtung erfasst, welche ein ortsaufgelöstes Bild wenigstens eines Abschnitts des gefertigten Behältnisses aufnimmt. Dabei kann es sich beispielsweise um eine CCD-Kamera oder dergleichen handeln. Mittels dieser Bildaufnahmeeinrichtung kann eine Vielzahl von physikalischen Eigenschaften, wie beispielsweise Risse des Behältnisses oder auch ein fehlerhafter Anspritzpunkt erfasst werden. Bei einem weiteren vorteilhaften Verfahren wird mittels einer Erfassungseinrichtung eine Wanddickenmessung durchgeführt, beispielsweise mittels Infrarot, an bevorzugt mehreren Positionen. Vorteilhaft werden auch mehrere Messverfahren miteinander kombiniert, das heißt es kann sowohl ein Bild aufgenommen werden als auch beispielsweise mit einer Infrarotmesseinrichtung eine Wanddicke eines Abschnitts des Behältnisses bestimmt werden. Weiterhin ist auch an zerstörende Prüfungen der Flasche gedacht, insbesondere mittels Berstprüfständen oder Pressen oder an Messeinrichtungen zur Erfassung der Sterilität, also zum Erfassen der vorhandenen Keime nach dem Blasprozess oder Füllprozess.

Diese gemessenen physikalischen Eigenschaften bzw. auch Fehler können bestimmten Behandlungselementen zugeordnet werden. Falls sich beispielsweise in einem Bodenbereich des Behältnisses zu viel Masse befindet, kann eine gezielte Regelung der einzelnen Umformungsstationen vorgenommen werden. Ein weiterer möglicher Fehler ist beispielsweise eine nicht ordnungsgemäße Ausprägung der Füßchen der gefertigten Behältnisse. Eigenschaften, wie zum Beispiel eine zu große Trennnaht oder eine nicht ausreichend vorhandene Kristallinität können sowohl der Blasform zugeordnet werden, beispielsweise, wenn diese verschmutzt ist oder kein Wärmeübergang stattfindet, oder auch der Umformungsstation bzw. der Temperierung eines Formträgers, einer Mutterform oder Blasform oder beispielsweise einem nicht funktionierenden, etwa verstopften Zufluss für ein Temperiermedium. Auch Fehler wie eine große Trennnaht können auf die Blasform selbst zurückzuführen sein, etwa falls diese verschlissen ist, oder aber darauf, dass Zentrierelemente der Blasform nicht richtig positioniert sind, oder ein eventueller Druckkissendruck nicht ausreichend ist oder auch dass der Blasdruck zu hoch ist.

Bevorzugt werden die Umformungsstationen mit einer Vielzahl von unterschiedlichen Bestückungskonfigurationen bestückt. Es wäre auch möglich, bei Feststellung von Fehlzuständen, welche auf mehreren z.B. 3, 4 oder 5 Behandlungselementen beruhen können, die Behandlungselemente auf mehrere unterschiedliche Umformungsstationen zu verteilen, um so schnell das fehlerhafte Behandlungselement ermitteln zu können.

Die vorliegende Erfindung ist weiterhin auf eine Vorrichtung zum Umformen von Kunststoffvorformlingen zu Kunststoffbehältnissen gerichtet, welche einen insbesondere bewegbaren Träger aufweist, an dem eine Vielzahl von Umformungsstationen zum Umformen von Kunststoffvorformlingen zu Kunststoffbehältnissen angeordnet ist. Dabei weist jede Umformungsstation jeweils einen Blasformträger mit zwei gegenüber einander bewegbaren Blasformträgerteilen auf und jeweils wenigstens eine Blasform mit zwei gegenüber einander bewegbaren Blasformteilen auf. Dabei bilden diese Blasformteile einen Hohlraum aus, in dessen Inneren ein Kunststoffbehältnis ausformbar ist und wenigstens eine Blasform ist an einem ersten Blasformträger derart anordenbar, dass sich eine erste Bestückungskonfiguration der Vorrichtung ergibt und diese Blasform ist auch an einem zweiten Blasformträger anordenbar, derart, dass sich eine zweite Bestückungskonfiguration ergibt. Weiterhin ist eine Speichereinrichtung vorgesehen, welche für wenigstens eine Bestückungskonfiguration charakteristische Daten abspeichert.

Erfindungsgemäß ist - bevorzugt in einer Transportrichtung der Behältnisse stromabwärts bezüglich der Transporteinrichtung und/oder an der Transporteinrichtung, insbesondere am Ende des Transportpfades, während dessen die Kunststoffvorformlinge zu den Kunststoffbehältnissen expandiert werden - eine Erfassungseinrichtung vorgesehen, welche wenigstens eine physikalische Eigenschaft eines gefertigten Behältnisses erfasst und es ist weiterhin eine Zuordnungseinrichtung vorgesehen, welche diese physikalische Eigenschaft wenigstens einer Bestückungskonfiguration zuordnet.

Bei den für die Bestückungskonfiguration charakteristischen Daten handelt es sich insbesondere um Daten, welche eine Aussage darüber erlauben, welche Behandlungselemente an welcher Umformungsstation angeordnet sind, d.h. z.B. welche Blasformen, Mutterformen, Blasdüsen, Reckstangen, Blasformschalenträger etc. an welchen Umformungsstationen angeordnet sind. Vorteilhaft ist wenigstens ein Behandlungselement, bevorzugt sind mehrere Behandlungselemente und besonders bevorzugt alle Behandlungselemente eindeutig identifizierbar.

Vorteilhaft ist auch wenigstens eine Vergleichseinrichtung vorgesehen, welche zwei dieser ermittelten physikalischen Eigenschaften miteinander vergleicht.

Bei einer weiteren vorteilhaften Ausführungsform ist wenigstens ein Behandlungselement, wie beispielsweise ein Blasformträgerteil oder auch ein Blasformteil derart gestaltet, dass es ausschließlich einer bestimmten Behandlungsstation zuordenbar ist. So wäre es beispielsweise denkbar, dass mit dem oben beschriebenen Verfahren eine ideale Bestückungskonfiguration der Vorrichtung ermittelt wird und anschließend die einzelnen Behandlungselemente derart gestaltet werden, dass diese so ermittelte Idealkonfiguration beibehalten werden kann. So wäre es beispielsweise denkbar, dass die einzelnen Behandlungselemente, wie Blasformträgerteile und Blasformteile jeweils mit RFID-Chips oder anderen Identifikationsmitteln ausgestattet werden und die Vorrichtung beispielsweise einen Arbeitsbetrieb nur dann zulässt, wenn sämtliche korrekten Behandlungselemente an der jeweils vorbestimmten Umformungsstation angeordnet worden sind. Auch wäre es möglich, dass anstelle von RFID-Chips mechanische Elemente vorgesehen sind, die nach dem Schlüssel-Schloss-Prinzip nur eine bestimmte Bestückungskonfiguration an den einzelnen Umformungsstationen zulassen.

Es wird jedoch darauf hingewiesen, dass diese Erfindung auch separat eingesetzt werden kann. Das heißt, dass im Gegensatz zu der hier beschriebenen Erfindung gerade von vornherein vorgesehen wird, dass an jeder Blasstation nur bestimmte Behandlungselemente angeordnet werden.

Die Anmelderin behält sich daher vor, Schutz zu beanspruchen für eine Vorrichtung zum Umformen von Kunststoffvorformlingen zu Kunststoffbehältnissen mit einem bewegbaren Träger, an dem eine Vielzahl von Umformungsstationen zum Umformen von Kunststoffvorformlingen zu den Kunststoffbehältnissen angeordnet ist, wobei jede Umformungsstation jeweils einen Blasformträger mit wenigstens zwei gegenüber einander bewegbaren Blasformträgerteilen und jeweils wenigstens eine Blasform mit zwei gegenüber einander bewegbaren Blasformteilen aufweist, wobei diese Blasformteile einen Hohlraum ausbilden, in dessen Inneren ein Kunststoffbehältnis ausformbar ist und wobei die Blasformträgerteile und die Blasformteile jeweils Behandlungselemente der Vorrichtung ausbilden und wobei wenigstens eines dieser Behandlungselemente mit einem Zuordnungselement versehen ist, wobei dieses Zuordnungselement derart ausgebildet ist, dass eine definierte Anordnung dieses Behandlungselements an einer bestimmten Umformungsstation vorgenommen werden kann. Vorteilhaft handelt es sich dabei bei dieser Umformungssstation um eine eindeutig definierte Umformungsstation.

Auf diese Weise kann eine Beibehaltung der Qualität der Behältnisse durch Vermeidung von Fehlern des Maschinenbedieners erreicht werden.

Generell kann es durch die Austauschbarkeit von Formen, Formhälften und Bodeneinsätzen in Blasformmaschinen mit mehreren Stationen vorkommen, dass nach einem Entfernen der Form aus der Maschine (zum Formatwechsel oder zu Reinigungszwecken) dieselbe Form vom Bediener nicht wieder in dieselbe Umformungsstation eingesetzt wird. Dies kann durch fertigungsbedingte Toleranzen Auswirkungen auf die Behältnisqualität haben, da zwei Formhälften (und auch der Boden) mit der Zeit aufeinander einlaufen, das heißt gegenseitig geringfügiger verschleißen. Auch ist es möglich, dass durch die Geometrie der Formträger bestimmte Blasformen auch auf diese Formträger einlaufen.

Wird beispielsweise eine komplette Blasform, die zuerst auf einen Formträger gelaufen ist, welcher im unteren Toleranzbereich gefertigt wurde und demzufolge schon sehr verschlissen ist, auf einem anderen Formträger im oberen Toleranzbereich (mit viel Platz für die Form) montiert, so kann der Formspalt relativ groß werden. Mit der Zeit wird so durch Durchwechseln einzelner Formen auf unterschiedlichen Formträgern jede Blasform mehr verschlissen, als wenn eine von vornherein festgelegte Zuordnung vorliegen würde. Entsprechend verhält es sich bei den einzelnen Teilformen zueinander. Im Laufe des ständigen Wechselns auf unterschiedliche Formate kann es vorkommen, dass die rechte Formhälfte einer bestimmten Blasform A mit der linken Formhälfte einer bestimmten Blasform B auf derselben Blasformstation montiert wird. Hier können sowohl die Verschleißplättchen als auch die Zentrierelemente wesentlich mehr verschleißen, als wenn sichergestellt würde, dass immer eine feste Zuordnung durch Formschluss vorläge.

Wie oben erwähnt, weist bevorzugt jedes einzelne der genannten Formatteile bzw. Behandlungselemente ein Zuordnungselement auf, welches eine Zuordnung zu einer bestimmen Umformungsstation, aber bevorzugt auch eine Zuordnung zu vorgegebenen anderen Behandlungselementen erlaubt.

Wie oben erwähnt handelt es sich bei diesen Zuordnungselementen beispielsweise um RFID-Einheiten, die an den einzelnen Behandlungselementen angeordnet sind. In einer Speichereinrichtung ist eine bestimmte Soll-Zuordnung bzw. eine bestimmte Soll-Konfiguration abgelegt und die Maschine teilt einem Benutzer mit, wenn diese Idealkonfiguration erreicht ist.

Es wäre jedoch auch möglich, dass an den Behandlungselementen, wie beispielsweise den Blasformteilen, Bolzen (und/oder Nuten) oder andere Elemente in einer für jede Blasform einzigartigen Position angebracht werden, die eine eindeutige Zuordnung der Blasformen zu einem bestimmten Formträger erlauben. Dabei wäre es auch möglich, dass diese Zuordnung durch den Benutzer eingestellt wird, sodass beispielsweise an bestimmten Stellen der Blasform gezielt Bolzen eingesetzt oder eingedreht werden können.

Auch wäre es möglich, dass an jeder Halbschale einer Blasform und an jedem Boden Bolzen oder ähnliches in einer für jede Blasformhälfte einzigartigen Position angebracht werden, die eine eindeutige Zuordnung der Blasformen zueinander und/oder zu dem bestimmten Formträger erlauben.

Weiterhin wäre es auch möglich, dass sich an der Blasmaschine bzw. der Vorrichtung ein Auslesegerät befindet, welches nur einen Betrieb erlaubt, wenn die korrekten Blasformen an der richtigen Station angebracht wurden.

Weiterhin wäre es auch möglich, dass an oder nach der Vorrichtung ein Inspektionsgerät angeordnet ist, welches die Position der einzelnen Blasstationen auf dem Blasrad zu einem beliebigen Zeitpunkt erkennt.

Insoweit wäre eine Ankopplung an einem Drehgeber möglich. Weiterhin wäre es auch möglich, dass durch die Erfassung einer eingeblasenen Kavitätennummer im Boden (üblicherweise ist diese nur im Boden angeordnet) die Blasstation der Kavität zugeordnet werden kann (hier wird die Nummer bevorzugt an dem geblasenen Behältnis erfasst). Wenn hier durch Bolzen oder dergleichen sichergestellt werden kann, dass nur ein Boden A einer rechten Formhälfte A und einer zugehörigen linken Formhälfte A zugeordnet ist, könnte ebenfalls eine Fehlermeldung erfolgen oder auch ein Maschinenstopp, wenn die vorgegebene Zuordnung nicht eingehalten wird.

Alternativ wäre es auch möglich, die Formnummer A jeder Formhälfte auch einzublasen. Auf diese Weise könnte auch die Zuordnung vorgenommen werden. Weiterhin wäre es auch denkbar, dass das Inspektionsgerät bzw. die Erfassungseinrichtung zusätzlich noch zur Überwachung von Wanddicken und Materialverteilungen in bestimmten Behältnisbereichen und/oder Bodenmassen dient. Es wäre hierzu jedoch auch denkbar, eine separate Vorrichtung vorzusehen.

In Verbindung mit einer zusätzlichen Qualitätskontrolle wäre es somit möglich zu erkennen, ob ein Fehler von einer Blasform kommt oder einer Blasstation. Weiterhin kann so durch ein bewusstes oder gezieltes Einsetzen der Formen in unterschiedliche Kavitäten errechnet werden, in welcher Kombination durchschnittlich die besten Behältnisse produziert werden. Im Falle eines Formwechselautomaten kann dieses Vorgehen auch systematisch bzw. programmgesteuert erfolgen. So ist es denkbar, dass der Bediener nach einer vorgegebenen Anzahl an Versuchen weiß, wie er die besten Ergebnisse hinsichtlich der Behältnisse erzielen kann.

Auch weiß der Bediener mit einer größeren Sicherheit, dass manche Fehler formbedingt und manche Fehler stationsbedingt auftreten. Auf diese Weise kann im Einzelfall eine bestimmte Form oder eine bestimmte Station (d.h. Reckstange, Ventilblock und Formträger) ausgetauscht werden.

Insbesondere kann nach dem Finden der optimalen Konfiguration ein Zuordnungselement erstmalig eingesetzt werden, so dass diese Konfiguration nicht mehr änderbar ist.

Weitere Vorteile und Ausführungsformen ergeben sich aus den beigefügten Zeichnungen:

Darin zeigen:
- Fig. 1: eine schematische Darstellung einer Anordnung zum Herstellen von Kunststoffbehältnissen zur Veranschaulichung der Erfindung;
- Fig. 2: eine Darstellung einer Umformungsstation;
- Fig. 3: eine Darstellung einer Anordnung mit einer geänderten Bestückungskonfiguration;
- Fig. 4a, 4b: zwei schematische Darstellungen für Blasformanordnungen;
- Fig. 5: eine Darstellung einer Anordnung zum Herstellen und Behandeln von Behältnissen.

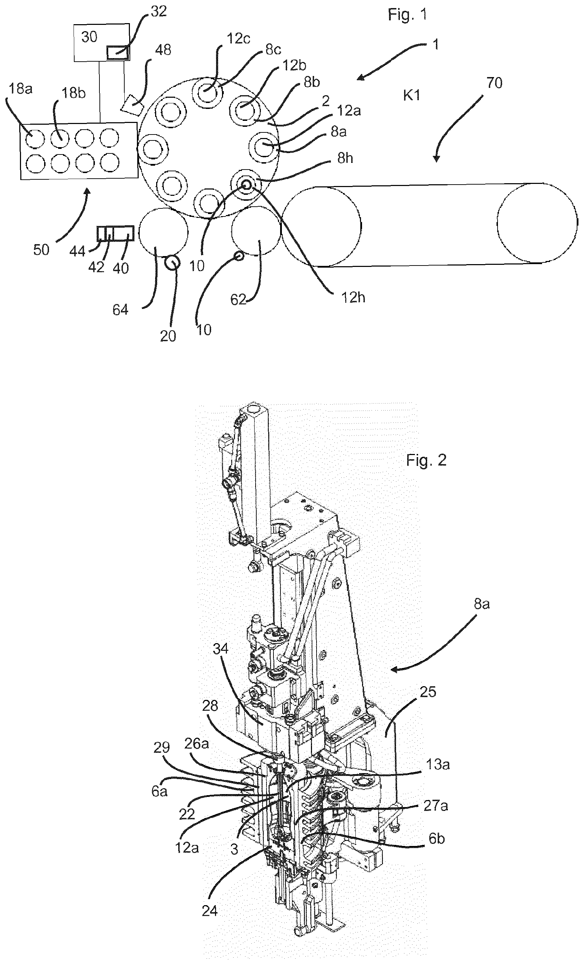

Fig. 1 zeigt eine Darstellung einer erfindungsgemäßen Anordnung zum Herstellen von Kunststoffbehältnissen. Dabei kennzeichnet das Bezugszeichen 70 grob schematisch einen Ofen, in dem Kunststoffvorformlinge 10 erwärmt werden. Anschließend werden die Kunststoffvorformlinge 10 über ein Zuführrad 62 an einen drehbaren Träger 2, der Bestandteil der Vorrichtung 1 zum Umformen von Kunststoffvorformlingen zu Kunststoffbehältnissen ist, übergeben. An diesem Träger ist eine Vielzahl von Umformungsstationen 8a, 8b, 8c .... 8h angeordnet. Diese einzelnen Umformungsstationen 8a, 8b, 8c .... 8h weisen dabei jeweils Behandlungselemente 12a, 12b, .. 12h zum Behandeln der Kunststoffvorformlinge auf.

Hier handelt es sich um eine Vielzahl von Behandlungselementen, wie beispielsweise Blasformen, in denen die Kunststoffvorformlinge zu Kunststoffbehältnissen expandiert werden können. Die Bezugszeichen 12a, 12b, ...12h bezeichnen hier Teile dieser Blasformen wie beispielsweise Blasformhälften. Bei der in Fig. 1 gezeigten Situation liegt eine erste Bestückungskonfiguration K1 vor, bei welcher die Blasform 12a der Umformungsstation 8a zugeordnet ist, die Blasform 12b der Umformungsstation 8b usw. Das Bezugszeichen 64 kennzeichnet ein Abführrad, welches die umgeformten Behältnisse 20, z.B. Getränkeflaschen, abführt.

Das Bezugszeichen 50 bezieht sich auf einen Formwechselautomaten, der mittels dem andere Blasformen beispielsweise zur Herstellung anderer Behältnisse eingesetzt werden können. So wäre es möglich, die acht Blasformen 18a, 18b ... 18h bei der Umstellung auf andere Behältnisgrössen an den einzelnen Umformungsstationen 8a bis 8h anzuordnen.

Das Bezugszeichen K1 kennzeichnet damit die durch die Anordnung der einzelnen Behandlungselemente (sowie auch durch die weiteren, nicht gezeigten Behandlungselemente) ausgebildete Bestückungskonfiguration.

Das Bezugszeichen 40 kennzeichnet eine Erfassungseinrichtung, welche einen physikalischen Zustand der gefertigten Behältnisse erfasst. Diese Erfassungseinrichtung 40 kann dabei eine (insbesondere stationär angeordnete) Bilderfassungseinrichtung aufweisen, welche Bilder der gefertigten Behältnisse aufnimmt. Es wäre jedoch auch möglich, dass sich die Erfassungseinrichtung mit den Behältnissen mitbewegt. Daneben weist diese Erfassungseinrichtung bevorzugt auch eine Auswerteeinheit auf, um anhand aufgenommener Bild auf eventuell fehlerhafte Behältnisse zu schließen. Die Erfassungseinrichtungen 40 zum Erfassen des physikalischen Zustand der gefertigten bzw. zu fertigenden Behältnisse könnten sich auch auf dem Blasrad 2 befinden, z.B. in Form einer Druckerfassung innerhalb des Behälters oder einer Wanddickenmessung oder Bildaufnahme innerhalb der Blasform 12 oder außerhalb zum Messen direkt nach der Öffnung der Blasform 12 für die Entnahme der Behältnisse.

Weiterhin ist eine Prozessoreinrichtung bzw. Zuordnungseinrichtung 42 vorgesehen, welche den von den Behältnissen aufgenommenen Bilder oder allgemein den von den Behältnissen erfassten Daten jeweils die Umformungsstation 8a, 8b... 8h zuordnet, welche dieses Behältnis geformt hat. In einer Speichereinrichtung 44 werden die erfassten Daten zumindest zeitweise gespeichert. Es können in diesem Bereich auch mehrere Erfassungseinrichtungen vorgesehen sein, welche unterschiedliche physikalische Eigenschaften der gefertigten Behältnisse erfassen.

Fig. 2 zeigt eine einzelne Umformungsstation 8a. Diese Umformungsstation 8a weist dabei einen Träger 25 auf, der wiederum an dem oben gezeigten Träger 2 angeordnet ist Daneben weist die Umformungsstation eine, insbesondere bewegbare, Blasdüse 28 auf, mit der die Kunststoffvorformlinge durch Beaufschlagung mit Druckluft zu den Kunststoffbehältnissen expandiert werden, bzw. die eine Abdichtung der einseitig eine Öffnung aufweisenden Vorformlinge gegenüber der Umgebung bewirkt, um den Innenraum des Vorformlings mit den Druckspeichern dicht zu verbinden. Das Bezugszeichen 3 kennzeichnet einen Hohlraum, der durch die Blasformteile bzw. Blasformhälften 12a, 13a ausgebildet wird.

Die Bezugszeichen 26a und 27a beziehen sich jeweils auf Mutterformen, an denen die Blasformen bzw. Blasformteile 12a, 13a angeordnet sind. Das Bezugszeichen 29 zeigt hier eine Blasformträgerschale und die Bezugszeichen 6a und 6b kennzeichnen den Formträger, bzw. die Formträgerteile, die schwenkbar an der Umformungsstation 8a angeordnet sind. Insbesondere die Blasformteile 12a, 13a, die Mutterformen 26a, 27a und die Blasformträgerschale 29 können von den Formträgern 6a, 6b abgenommen werden. Zwischen der Formträgerschale 29 und dem hier linken Formträger 6a befindet sich eine nicht gezeigte Dichtung, innerhalb der sich ein Druckkissen aufbaut, welches ein festes Aneinanderpressen der Blasformteile während des Blasens der Behälter bewirkt, bzw. welches dem Blasdruck innerhalb der Behälter entgegenwirkt.

Das Bezugszeichen 34 kennzeichnet einen Ventilblock und das Bezugszeichen 22 eine Reckstange, welche in die Behältnisse einfahren kann, um diese zu recken. Der Ventilblock kann dabei ebenfalls ein Bestandteil der Umformungsstation 8a sein. Das Bezugszeichen 24 kennzeichnet ein Bodenteil der Blasform, welches das Negativ des entstehenden Behälterbodens ist.

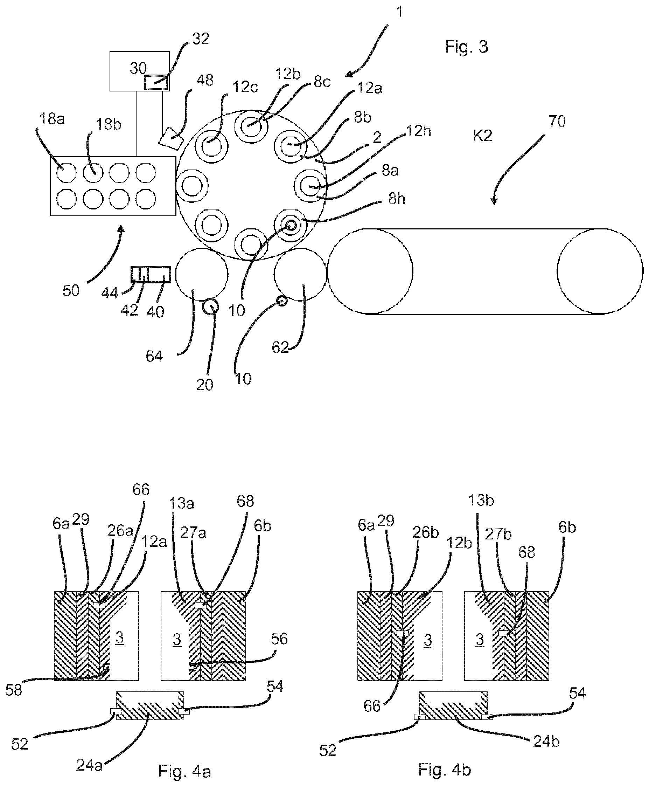

Fig. 3 zeigt eine erfindungsgemäße Vorrichtung, ähnlich wie bei der in Fig. 1 gezeigten Situation, wobei jedoch hier eine Bestückungskonfiguration K2 vorliegt. Man erkennt, dass hier der Umformungsstation 8a die Blasform bzw. das Blasformteil 12h zugeordnet ist, der Umformungsstation 8b die Blasform bzw. das Blasformteil 12a usw. Genauer wurde hier die Besetzung der einzelnen Blasformteile 12a, 12b um eine Teilung weiter gedreht. Damit wurde die Konfiguration bezüglich jeder einzelnen Umformungsstation 8a bis 8h geändert. Es wäre jedoch auch möglich, lediglich den Besetzungszustand zweier Umformungsstationen 8a, 8b zu vertauschen oder nur einer, wenn eine zusätzliche Blasform vorhanden ist. Das Bezugszeichen 48 kennzeichnet eine Inspektionseinrichtung, welche die einzelnen Behandlungselemente, z. B. die Blasformen bzw. Blasformteile 12a und 12b jeweils während der Vorbeibewegung dieser Behandlungselemente erkennen kann.

Es wäre jedoch auch eine anderweitige Erfassung möglich, beispielsweise indem - wie oben erwähnt - die einzelnen Behandlungselemente jeweils diese eindeutig identifizierenden Merkmale aufweisen.

Das Bezugszeichen 30 kennzeichnet eine Prozessoreinrichtung, mit der beispielsweise die Anordnung der Behandlungselemente 12a, 13a, 12b, 13b ... an den einzelnen Umformungsstationen 8a, 8b...8h d.h. die Bestückungskonfiguration gesteuert werden kann. Auch kann diese Prozessoreinrichtung die einzelnen Bestückungskonfigurationen verwalten und zur Zuordnung der einzelnen Bestückungskonfigurationen zu gemessenen physikalischen Eigenschaften der Behältnisse beitragen. Die Prozessoreinrichtung 30 kann auch mit der Erfassungseinrichtung 40 für Behältnisse zum Datenaustausch verbunden sein. Das Bezugszeichen 32 kennzeichnet eine Speichereinrichtung, in der Merkmale der einzelnen Bestückungskonfigurationen abgespeichert sind, etwa die Information, dass an einer bestimmten Umformungsstation 8a die Behandlungselemente 12a, 13a, 26a, 27a... angeordnet sind. Weiterhin können in dieser Speichereinrichtung 32 auch vergangene Bestückungskonfigurationen abgespeichert sein, ggfs. gemeinsam mit den für diese Bestückungskonfigurationen erfassten physikalischen Eigenschaften der Behältnisse, z.B. dem Auftreten von Fehlern bei denjenigen Behältnissen, welche von der Umformungsstation 8b gefertigt wurden. Ebenfalls kann die Prozessoreinrichtung mit einem oder mehreren Sensoren der Antriebe der Blasstationen verbunden sein, um erhaltene Fehlermeldungen zu Speichern und zuzuordnen.

Allgemein wäre es möglich, dass beispielsweise an einem ersten Tag der Produktion der Umformungsstation 8a die Blasform bzw. das Blasformteil 12a zugeordnet ist, dass an einem zweiten Tag die Maschine Behältnisse mit den Blasformen 18a, 18b produziert und am dritten Tag die in Fig. 3 gezeigte Konfiguration vorliegt. Falls nun die Erfassungseinrichtung 40 am ersten Tag einen Fehler in jedem Behältnis erkennt, welches in der Umformungsstation 8a geblasen wurde und am dritten Tag einen Fehler bei jedem Behältnis erkennt, welches in der Umformungsstation 8b geblasen wurde, kann eine entsprechende Fehlermeldung ausgegeben werden, wobei insbesondere darauf geschlossen werden kann, dass die Blasform bzw. das Blasformteil 12a fehlerhaft ist.

Falls andererseits die Erfassungseinrichtung 40 am ersten Tag einen Fehler bei jedem Behältnis erkennt, welches in der ersten Station 8a geblasen wurde und am dritten Tag einen Fehler (insbesondere den gleichen Fehler) bei jedem Behältnis erkennt, welches in der Umformungsstation 8a geblasen wurde, kann ebenfalls eine Fehlermeldung ausgegeben werden, welche darauf hinweist, dass die Umformungsstation selbst defekt ist. Bevorzugt sind Steuerungen von mehreren z.B. bis zu sechs Gruppen von Eingangswerten möglich, die insgesamt in eine mögliche Regelung mit eingehen.

So kann beispielsweise die Nummer der Blasform anhand der gefertigten Flasche gemessen werden. Auch kann die Nummer der Blasform durch eine Erkennung der Form innerhalb der Umformungsstation gemessen werden. Weiterhin wäre es auch möglich, die Nummer der Umformungsstation, d. h. 8a, 8b .... durch einen Drehwertgeber vorzugeben. Weiterhin können die gemessenen Qualitätsmerkmale der Behältnisse sowohl einer Station zugeordnet werden, weitere gemessene Qualitätsmerkmale können - wie oben erwähnt - bestimmten Blasformen oder anderen Behandlungselementen zugeordnet werden, und weitere gemessene Qualitätsmerkmale können sowohl der Umformungsstation 8a ... 8h oder auch zu der Blasform 12a ... 12h zugeordnet werden. Das hier beschriebene Verfahren kann - wie oben erwähnt - auch für andere Behandlungselemente, wie beispielsweise die Reckstange, die Blasträgerschalen oder auch die Blasdüse 28 durchgeführt werden.

Auf diese Weise ist es auch möglich, insbesondere mit einer Vielzahl unterschiedlicher Bestückungskonfigurationen für jede Umformungsstation 8a, 8b, ... 8h eine Idealbestückungskonfiguration zu ermitteln, mit der die bestmöglichen Behältnisse gefertigt werden können, insbesondere auch unter Einbeziehung der einzelnen Behandlungselemente.

Die Figuren 4a und 4b zeigen grob schematisch zwei Darstellungen zur Veranschaulichung unterschiedlicher Anordnungen. Man erkennt hier wiederum die Blasformteile 12a, 13a, die hier an ihren Trägerschalen angeordnet sind. Das Bodenteil 24a kann wiederum zwischen den beiden Blasformteilen 12a, 13a angeordnet werden. Dabei sind hier Stifte 52, 54 an dem Bodenteil 24a vorgesehen, die in entsprechende Ausnehmungen 56, 58 in den Blasformteilen 12a, 13a eingreifen. Bei der in Fig. 4b gezeigten Situation wurde die Anordnung dieser beiden Bolzen 52, 54 geändert, und es wurde entsprechend auch die Höhenstellung der Ausnehmungen 56 und 58 geändert. Auf diese Weise passt das Bodenteil 24a in Fig. 4a genau zu den Blasformteilen 12a, 13a und das Bodenteil 24b in Fig. 4b passt genau zu den Blasformteilen 12b, 13b. Entsprechende Bolzen 66, 68 können auch an den Außenwandungen der Blasformen vorgesehen sein, so dass auch hier nur spezielle Blasformen 12a und 13a an den Mutterformen 26a, 27a angeordnet werden können.

Ebenso können Stifte zur Verbindung der Mutterformen 26a, 27a, 26b, 27b mit den Formträgerschalen 29 oder der Formträgerschalen 29 zu den Formträgern 6a, 6b oder der Blasformen 12a, 13a, 12b, 13b mit den Formträgerschalen 29 (falls keine Mutterformen 26a, 27a, 26b, 27b eingesetzt werden) oder von den Blasformen 12a, 13a, 12b, 13b mit den Formträgern 6a, 6b (falls weder Mutterformen 26a, 27a noch Formträgerschalen 29 eingesetzt werden) in gleicher Weise eingesetzt werden (nicht gezeigt). Ebenso kann das Bodenteil 24a, 24b mit einer individuellen Position für einen Stift mit seinem (nicht gezeigten) Träger verbunden werden.

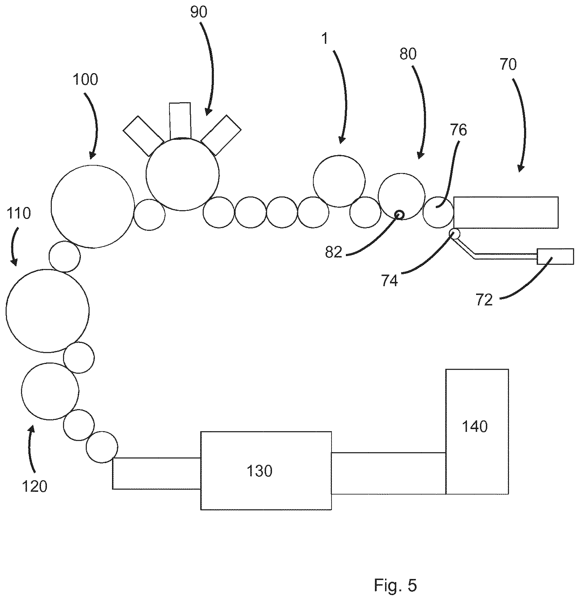

Fig. 5 zeigt eine Gesamtdarstellung einer Anordnung zum Behandeln von Behältnissen. Hier ist wiederum die Erwärmungseinrichtung 70 vorgesehen, welche die Kunststoffvorformlinge erwärmt. Das Bezugszeichen 72 kennzeichnet ein Vorformlingsreservoir bzw. eine Sortiereinheit für Vorformlinge und das Bezugszeichen 74 einen Eintakt-Stern, der die Vorformlinge getaktet bzw. vereinzelt der Erwärmungseinrichtung 70 zuführt. An diese Erwärmungseinrichtung 70 schließt sich ein Übergaberad 76 an, welches die erwärmten Kunststoffvorformlinge hier zunächst einem Sterilisationsmodul 80 zuführt. Dieses Sterilisationsmodul 80 weist eine Vielzahl von Sterilisationseinrichtungen 82 auf, die an einem Träger angeordnet sind. An dieses Sterilisationsmodul 80 schließt sich eine erfindungsgemäße Vorrichtung 1 zum Umformen der Kunststoffvorformlinge zu Kunststoffbehältnissen an.
Das Bezugszeichen 90 bezieht sich auf eine Etikettiereinrichtung, welche die umgeformten, jedoch noch ungefüllten Behältnisse etikettiert. Das Bezugszeichen 100 kennzeichnet einen Rinnserzum Spülen der Behältnisse und das Bezugszeichen 110 eine Fülleinrichtung zum Befüllen der Behältnisse. Anschließend werden die befüllten Behältnisse von einer Verschließeinrichtung 120 verschlossen. Das Bezugszeichen 130 kennzeichnet einen Packer und das Bezugszeichen 140 einen Palettierer.

### Bezugszeichenliste

- 1: Vorrichtung
- 2: Träger
- 3: Hohlraum
- 6a, 6b: Blasformträgerteile
- 8a-8h: Umformungsstationen
- 10: Kunststoffvorformlinge
- 12a-12h, 13a,b: Blasformteile
- 18a-18h: Blasformen
- 20: Behältnis
- 22: Reckstange
- 24a, 24b: Bodenteil
- 25: Träger
- 26a, 26b: Mutterformen
- 27a, 27b:
- 28: Blasdüse
- 29: Blasformschale
- 30: Prozessoreinrichtung
- 32: Speichereinrichtung
- 34: Ventilblock
- 40: Erfassungseinrichtung
- 42: Zuordnungseinrichtung
- 44: Speichereinrichtung
- 48: Inspektionseinrichtung
- 50: Formwechselautomat
- 52, 54: Stifte/Bolzen
- 56, 58: Ausnehmungen
- 62: Zuführrad
- 64: Abführrad
- 66, 68: Bolzen
- 70: Ofen
- 72: Vorformlingsreservoir
- 74: Eintakt-Stern
- 76: Übergaberad
- 80: Sterilisationsmodul
- 82: Sterilisationseinrichtungen
- 86: Blasformträgerteile
- 90: Etikettiereinrichtung
- 100: Rinser
- 110: Fülleinrichtung
- 120: Verschließeinrichtung
- 130: Packer
- 140: Palettierer

- K1: Bestückungskonfiguration
- K2: Bestückungskonfiguration

## Patentansprüche

1. Verfahren zum Betreiben einer Vorrichtung (1) zum Umformen von Kunststoffvorformlingen (10) zu Kunststoffbehältnissen (20), wobei die Vorrichtung einen Träger (2) aufweist, an dem eine Vielzahl von Umformungsstationen (8a, 8b, ... 8h) angeordnet ist und jede dieser Umformungsstationen (8a, 8b, ...8h) wenigstens ein Behandlungselement (12a, 12b, ...12h) zum Behandeln der Kunststoffvorformlinge (10) aufweist, mit den Schritten
- Bestücken der einzelnen Umformungsstationen (8a, 8b, ...8h) in einer ersten Bestückungskonfiguration (K1), wobei jeder Behandlungsstation (8a, 8b, ...8h) ein bestimmtes Behandlungselement (12a, 12b, ...12h) zugeordnet wird;
- Erfassen wenigstens einer physikalischen Eigenschaft, welche für die Umformung der Kunststoffvorformlinge (10) oder für die umgeformten Behältnisse (20) charakteristisch ist, wobei die physikalische Eigenschaft im Rahmen der ersten Bestückungskonfiguration (K1) erfasst wird;
- Bestücken der einzelnen Umformungsstationen (8a, 8b, ...8h) in einer zweiten Bestückungskonfiguration (K2), wobei jeder Umformungsstation (8a, 8b, ...8h) wenigstens ein bestimmtes Behandlungselement (12a, 12b, ...12h) zugeordnet wird und wobei sich die zweite Bestückungskonfiguration (K2) derart von der ersten Be stückungskonfiguration (K1) unterscheidet, dass im Rahmen der zweiten Bestückungskonfiguration (K2) wenigstens ein Behandlungselement (12a, 12b, ...12h) einer anderen Umformungsstation zugeordnet ist als im Rahmen der ersten Bestückungskonfiguration;
- Erfassen wenigstens einer physikalischen Eigenschaft, welche für die Umformung der Behältnisse (20) oder für die umgeformten Behältnisse (20) charakteristisch ist, wobei die physikalische Eigenschaft im Rahmen der zweiten Bestückungskonfiguration (K2) erfasst wird,
**dadurch gekennzeichnet, dass**
die im Rahmen der ersten Bestückungskonfiguration (K1) erfasste physikalische Eigenschaft mit der im Rahmen der zweiten Bestückungskonfiguration (K2) erfassten physikalischen Eigenschaft verglichen wird oder wenigstens eine im Rahmen einer Bestückungskonfiguration (K1, K2) erfasste physikalische Eigenschaft mit einer Referenzeigenschaft verglichen wird und aus dem Vergleich der in einer Bestückungskonfiguration (K1, K2) aufgenommenen physikalischen Eigenschaft mit einer Referenzeigenschaft und/oder der in der weiteren Bestückungskonfiguration (K2, K1) aufgenommenen physikalischen Eigenschaft auf einen Zustand der Vorrichtung (1) geschlossen wird.

2. Verfahren nach Anspruch 1,
**dadurch gekennzeichnet, dass**
wenigstens eine physikalische Eigenschaft einer bestimmten Umformungsstation (8a, 8b, ...8h) zugeordnet wird.

3. Verfahren nach wenigstens einem der vorangegangenen Ansprüche,
**dadurch gekennzeichnet, dass**
wenigstens eine physikalische Eigenschaft einem bestimmten Behandlungselement (12a, 12b, ...12h) zugeordnet wird.

4. Verfahren nach wenigstens einem der vorangegangenen Ansprüche,
**dadurch gekennzeichnet, dass**
jede Blasstation einen Blasformenträger (26a, 27a) aufweist und das Behandlungselement aus einer Gruppe von Behandlungselementen ausgewählt ist, welche an dem Blasformenträger (6a, 6b) anordenbare Blasformteile (12a, 13a, 12b, 13b, ...), Blasdüsen, Reckstangen (22), an dem Blasformenträger anordenbare Blasformbodenteile (24) und dergleichen enthält.

5. Verfahren nach wenigstens einem der vorangegangenen Ansprüche,
**dadurch gekennzeichnet, dass**
die physikalische Eigenschaft aus einer Gruppe von physikalischen Eigenschaften ausgewählt ist, welche eine Kristallinität des gefertigten Behältnisses (20), eine Wandungsdicke des gefertigten Behältnisses (20), die Abmessungen einer Trennnaht des gefertigten Behältnisses (20), das Vorhandensein von Brüchen und Rissen in einer Wandung des Behältnisses (20), eine Massenverteilung des gefertigten Behältnisses (20), eine Lage des Anspritzpunktes des gefertigten Behältnisses (20), die Ausprägungen von Konturen des Behältnisses (20), Kombinationen hieraus und dergleichen enthält.

6. Verfahren nach wenigstens einem der vorangegangenen Ansprüche,
**dadurch gekennzeichnet, dass**
die physikalische Eigenschaft mittels einer Bildaufnahmeeinrichtung erfasst wird, welche ein ortsaufgelöstes Bild wenigstens eines Abschnitts eines gefertigten Behältnisses aufnimmt.

7. Vorrichtung zum Umformen von Kunststoffvorformlingen (10) zu Kunststoffbehältnissen mit einem, insbesondere bewegbaren, Träger (2), an dem eine Vielzahl von Umformungsstationen (8a, 8b, ...8h) zum Umformen von Kunststoffvorformlingen (10) zu den Kunststoffbehältnissen angeordnet ist, wobei jede Umformungsstation (8a, 8b, ...8h) jeweils einen Blasformträger mit wenigstens zwei gegenüber einander bewegbaren Blasformträgerteilen (6a, 6b) und jeweils wenigstens eine Blasform mit zwei gegenüber einander bewegbaren Blasformteilen (12a, 13a) aufweist, wobei diese Blasformteile (12a, 13a) einen Hohlraum (3) ausbilden, in dessen Innerem ein Kunststoffbehältnis (20) ausformbar ist, und wobei wenigstens eine Blasform an einem ersten Blasformträger anordenbar ist, derart, dass sich eine erste Bestückungskonfiguration (K1) der Vorrichtung (1) ergibt, und wobei diese Blasform auch an einem zweiten Blasformträger anordenbar ist, derart, dass sich eine zweite Bestückungskonfiguration (K2) ergibt und wobei weiterhin eine Speichereinrichtung (32) vorgesehen ist, welche für wenigstens eine Bestückungskonfiguration charakteristische Daten abspeichert,
**dadurch gekennzeichnet, dass**
in einer Transportrichtung der Behältnisse (20) stromabwärts bezüglich der Transporteinrichtung und/oder an der Transporteinrichtung eine Erfassungseinrichtung (40) angeordnet ist, welche wenigstens eine physikalische Eigenschaft eines gefertigten Behältnisses (20) erfasst und weiterhin eine Zuordnungseinrichtung vorgesehen ist, welche diese physikalische Eigenschaft wenigstens einer Bestückungskonfiguration (K1, K2) zuordnet.

## Claims

1. Method for operating a system (1) for transforming plastic parisons (10) into plastic containers (20), wherein the system has a carrier (2) on which a plurality of transforming stations (8a, 8b, ...8h) is arranged and each of these transforming stations (8a, 8b, ... 8h) has at least one handling element (12a, 12b, ... 12h) for handling the plastic parisons (10), comprising the steps of:
- loading the individual transforming stations (8a, 8b, ... 8h) in a first loading configuration (K1), wherein a specific handling element (12a, 12b, ... 12h) is assigned to each transforming station (8a, 8b, ... 8h);
- detecting at least one physical characteristic which is characteristic for the transformation of the plastic parisons (10) or for the transformed containers (20), wherein the physical characteristic is detected within the scope of the first loading configuration (K1);
- loading the individual transforming stations (8a, 8b, ... 8h) in a second loading configuration (K2), wherein at least one specific handling element (12a, 12b, ... 12h) is assigned to each transforming station (8a, 8b, ... 8h), and wherein the second loading configuration (K2) differs from the first loading configuration (K1) in such a way that within the scope of the second loading configuration (K2) at least one handling element (12a, 12b, ... 12h) is assigned to a different transforming station than within the scope of the first loading configuration;
- detecting at least one physical characteristic which is characteristic for the transformation of the containers (20) or for the transformed containers (20), wherein the physical characteristic is detected within the scope of the second loading configuration (K2),
**characterised in that**
the physical characteristic detected within the scope of the first loading configuration (K1) is compared with the physical characteristic detected within the scope of the second loading configuration (K2), or at last one physical characteristic detected within the scope of a loading configuration (K1, K2) is compared with a reference characteristic, and a state of the system (1) can be inferred from the comparison of the physical characteristic included in a loading configuration (K1, K2) with a reference characteristic and/or the physical characteristic included in the further loading configuration (K2, K1).

2. Method according to claim 1,
**characterised in that**
at least one physical characteristic is assigned to a specific transforming station (8a, 8b, ... 8h).

3. Method according to at least one of the preceding claims,
**characterised in that**
at least one physical characteristic is assigned to a specific handling element (12a, 12b, ... 12h).

4. Method according to at least one of the preceding claims,
**characterised in that**
each blow moulding station has a blow mould support (26a, 27a) and the handling element is selected from a group of handling elements which includes blow mould parts (12a, 13a, 12b, 13b ...) which can be arranged on the blow mould supports (6a, 6b), blow moulding dies, stretching rods (22), blow mould base parts (24) which can be arranged on the blow moulds, and the like.

5. Method according to at least one of the preceding claims,
**characterised in that**
the physical characteristic is selected from a group of physical characteristics which includes a crystallinity of the produced container (20), a wall thickness of the produced container (20), the dimensions of a dividing seam of the produced container (20), the presence of fractures and cracks in a wall of the container (20), a mass distribution of the produced container (20), a position of the injection point of the produced container (20), the shaping of contours on the container (20), combinations thereof and the like.

6. Method according to at least one of the preceding claims,
**characterised in that**
the physical characteristic is detected by means of an image recording device which records a spatially resolved image of at least a portion of the produced container.

7. System for transforming plastic parisons (10) into plastic containers with carrier (2) which is in particular movable and on which a plurality of transforming stations (8a, 8b, ... 8h) for transforming plastic parisons (10) into the plastic containers are arranged, wherein each transforming station (8a, 8b, ... 8h) has a respective blow mould support with at least two blow mould support parts (6a, 6b) which can be moved relative to one another and at least one respective blow mould with two blow mould parts (12a, 13a) which can be moved relative to one another, wherein these blow mould parts (12a, 13a) form a hollow space (3), in the interior of which a plastic container (20) can be formed, and wherein at least one blow mould can be arranged on a first blow mould support in such a way that a first loading configuration (K1) of the system (1) is produced, and wherein this blow mould can also be arranged on a second blow mould support in such a way that a second loading configuration (K2) is produced, and wherein furthermore a storage device (32) is provided, which stores characteristic data for at least one loading configuration,
**characterised in that**
a detection device (40) which detects at least one physical characteristic of a finished container (20) is arranged in a transport direction of the containers (20) downstream with respect to the transport device and/or is arranged on the transport device, and furthermore an assigning device is provided, which assigns this physical characteristic to at least one loading configuration (K1, K2).

## Revendications

1. Procédé permettant de faire fonctionner un dispositif (1) pour le façonnage d'ébauches en matière plastique (10) pour obtenir des contenants en matière plastique (20), dans lequel le dispositif présente un support (2), sur lequel une pluralité de postes de façonnage (8a, 8b, ... 8h) est agencée et chacun de ces postes de façonnage (8a, 8b, ... 8h) présente au moins un élément de traitement (12a, 12b, ... 12h) pour le traitement des ébauches en matière plastique (10), avec les étapes
- équipement des postes de façonnage individuels (8a, 8b, ... 8h) dans une première configuration d'équipement (K1), dans lequel à chaque poste de traitement (8a, 8b, ... 8h) est associé un élément de traitement déterminé (12a, 12b, ... 12h) ;
- détection d'au moins une propriété physique qui est caractéristique du façonnage des ébauches en matière plastique (10) ou des contenants (20) façonnés, dans lequel la propriété physique est détectée dans le cadre de la première configuration d'équipement (K1) ;
- équipement des postes de façonnage individuels (8a, 8b, ... 8h) dans une seconde configuration d'équipement (K2), dans lequel à chaque poste de façonnage (8a, 8b, ... 8h) est associé au moins un élément de traitement déterminé (12a, 12b, ... 12h) et dans lequel la seconde configuration d'équipement (K2) se distingue de la première configuration d'équipement (K1) de telle manière que dans le cadre de la seconde configuration d'équipement (K2) au moins un élément de traitement (12a, 12b, ... 12h) est associé à un autre poste de façonnage que dans le cadre de la première configuration d'équipement ;
- détection d'au moins une propriété physique qui est caractéristique du façonnage des contenants (20) ou des contenants façonnés (20), dans lequel la propriété physique est détectée dans le cadre de la seconde configuration d'équipement (K2),
**caractérisé en ce que**
la propriété physique détectée dans le cadre de la première configuration d'équipement (K1) est comparée avec la propriété physique détectée dans le cadre de la seconde configuration d'équipement (K2) ou au moins une propriété physique détectée dans le cadre d'une configuration d'équipement (K1, K2) est comparée avec une propriété de référence et à partir de la comparaison de la propriété physique enregistrée dans une configuration d'équipement (K1, K2) avec une propriété de référence et/ou la propriété physique enregistrée dans l'autre configuration d'équipement (K2, K1) il est conclu à un état du dispositif (1).

2. Procédé selon la revendication 1,
**caractérisé en ce que**
au moins une propriété physique est associée à un poste de façonnage déterminé (8a, 8b, ... 8h).

3. Procédé selon au moins l'une des revendications précédentes,
**caractérisé en ce que**
au moins une propriété physique est associée à un élément de traitement déterminé (12a, 12b, ... 12h).

4. Procédé selon au moins l'une des revendications précédentes,
**caractérisé en ce que**
chaque poste de soufflage présente un support de formage par soufflage (26a, 27a) et l'élément de traitement est sélectionné dans un groupe d'éléments de traitement qui contient des parties de moule de soufflage (12a, 13a, 12b, 13b ...) pouvant être agencées sur le support de formage par soufflage (6a, 6b), des buses de soufflage, des tiges d'étirage (22), des parties de fond de moule de soufflage (24) pouvant être agencées sur le support de formage par soufflage et similaires.

5. Procédé selon au moins l'une des revendications précédentes,
**caractérisé en ce que**
la propriété physique est sélectionnée dans un groupe de propriétés physiques qui contient une cristallinité du contenant fabriqué (20), une épaisseur de paroi du contenant fabriqué (20), les dimensions d'un cordon de séparation du contenant fabriqué (20), la présence de ruptures et fissures dans une paroi du contenant (20), une répartition de masse du contenant fabriqué (20), une position du point d'injection du contenant fabriqué (20), les caractéristiques de contours du contenant (20), des combinaisons de ceux-ci et similaires.

6. Procédé selon au moins l'une des revendications précédentes,
**caractérisé en ce que**
la propriété physique est détectée à l'aide d'un dispositif de prise d'image qui enregistre une image à résolution spatiale au moins d'une section d'un contenant fabriqué.

7. Dispositif de façonnage d'ébauches en matière plastique (10) pour obtenir des contenants en matière plastique avec un support (2), mobile en particulier, sur lequel une pluralité de postes de façonnage (8a, 8b ... 8h) est agencée pour le façonnage d'ébauches en matière plastique (10) pour obtenir des contenants plastiques, dans lequel chaque poste de façonnage (8a, 8b, ... 8h) présente respectivement un support de moule de soufflage avec au moins deux parties de support de moule de soufflage (6a, 6b) mobiles l'une par rapport à l'autre et respectivement au moins un moule de soufflage avec deux parties de moule de soufflage (12a, 13a) mobiles l'une par rapport à l'autre, dans lequel ces parties de moule par soufflage (12a, 13a) réalisent une cavité (3), à l'intérieur de laquelle un contenant en matière plastique (20) peut être démoulé et dans lequel au moins un moule de soufflage peut être agencé sur un premier support de moule de soufflage de telle manière qu'il résulte une première configuration d'équipement (K1) du dispositif (1), et dans lequel ce moule de soufflage peut aussi être agencé sur un second support de moule de soufflage de telle manière qu'il résulte une seconde configuration d'équipement (K2) et dans lequel un dispositif d'enregistrement (32) est en outre prévu, lequel enregistre des données caractéristiques pour au moins une configuration d'équipement,
**caractérisé en ce que**
dans un sens de transport des contenants (20) en aval par rapport au dispositif de transport et/ou sur le dispositif de transport un dispositif de détection (40) est agencé, lequel détecte au moins une propriété physique d'un contenant fabriqué (20) et un dispositif d'association est en outre prévu, lequel associe cette propriété physique à au moins une configuration d'équipement (K1, K2).
